Europäisches Patentamt

European Patent Office

Office européen des brevets

(19)

(11) Numéro de publication: **0 056 351**
**B1**

(12) **FASCICULE DE BREVET EUROPEEN**

(45) Date de publication du fascicule du brevet:
12.12.84

(51) Int. Cl.³: **D 03 D 11/00,** D 03 D 41/00,
B 29 D 3/02

(21) Numéro de dépôt: 82420001.8

(22) Date de dépôt: 06.01.82

(54) **Tissu tridimensionnel pour le renforcement de matériaux stratifiés et éléments en forme obtenus à partir d'un tel tissu.**

(30) Priorité: 12.01.81 FR 8100498

(43) Date de publication de la demande:
21.07.82 Bulletin 82/29

(45) Mention de la délivrance du brevet:
12.12.84 Bulletin 84/50

(84) Etats contractants désignés:
AT BE CH DE GB IT LI NL SE

(56) Documents cités:
FR - A - 2 315 562
US - A - 4 095 619
US - A - 4 131 708
US - A - 4 193 828

(73) Titulaire: **J. BROCHIER ET FILS (Société Anonyme),
70, cours Tolstoi, F-69100 Villeurbanne (FR)**

(72) Inventeur: **Micheaux, Dominique, 18, rue des Pins,
F-38230 Vilette d'Anthon (FR)**
Inventeur: **Palmer, Ray, 515 Kings Place, Newport
Beach, CA 92663 (US)**

(74) Mandataire: **Laurent, Michel et al, 20 rue Louis Chirpaz
Boite Postale 32, F-69130 Lyon-Ecully (FR)**

BUNDESDRUCKEREI BERLIN

## Description

La présente invention a trait à un nouveau tissu tridimensionnel utilisable pour le renforcement de matériaux stratifiés; elle concerne également des éléments textiles en forme obtenus à partir d'un tel tissu utilisables également pour la réalisation de matériaux stratifiés et plus particulièrement de pièces de structure c'est-à-dire d'éléments travaillants.

Les matériaux stratifiés sont connus depuis fort longtemps et sont constitués par une alternance de couches de matières textiles (tissu, non tissés...) que l'on imprègne de résine, l'ensemble étant ensuite traité thermiquement afin de provoquer la prolymérisation de ladite résine et le durcissement de l'ensemble.

Ces matériaux ont trouvé de nombreuses applications, soit sous la forme d'éléments plans (plaques), soit sous la forme d'éléments conformés obtenus par moulage, notamment dans le bâtiment, l'automobile, la marine, l'aéronautique...

A ce jour, la plupart des matériaux stratifiés sont obtenus par superposition d'une pluralité de couches textiles imprégnées de résine prépolymérisée. Comme matériaux textiles, on utilise soit des nappes formées de fils parallèles, soit des fils tissés. Comme matières entrant dans la composition de telles nappes, on utilise par exemple des fils de verre, de graphite, de bore, aramide seuls ou en mélange.

Il a également été proposé de réaliser des éléments textiles en forme permettant d'obtenir des stratifiés ayant des sections en forme de I, J, T, Ω.... L'obtention de tels matériaux est en général réalisée en superposant un nombre approprié de nappes textiles de préférence en les entrecroisant sur un gabarit permettant d'obtenir la forme désirée. Une telle superposition des différentes couches qui est, à ce jour, réalisée manuellement, est longue et coûteuse et surtout entraîne des risques d'erreur, le manipulateur pouvant se tromper dans le nombre de couches superposées et/ou dans la mise en place des différentes couches les unes par rapport aux autres.

Pour surmonter cet inconvénient, de nombreuses solutions ont été proposées pour obtenir des matériaux tissés ou non tissés ayant des formes diverses, ces matériaux étant ensuite imprégnés par une résine. De tels matériaux de forme complexe sont surtout destinés en vue de présenter de bonnes caractéristiques acoustiques et non pas de hautes performances mécaniques permettant de les utiliser comme pièces de structure.

Ainsi, par exemple, le brevet des Etats-Unis d'Amérique n° 3 481 427 décrit par un tissu tridimensionnel à base de fils de verre, qui après imprégnation avec une résine et polymérisation, donne un panneau rigide poreux présentant de très bonnes propriétés acoustiques. Selon ce document, il est possible de tisser en une seule opération un matériau de type »sandwich« dont une face est poreuse, l'autre face étant continuer, ces deux faces étant reliées entre elles par des cannelures. Un tel matériau tissé n'est pas destiné à présenter une grande résistance mais a surtout pour fonction d'obtenir une bonne absorption des sons.

Le brevet des Etats-Unis d'Amérique n° 3 700 067 décrit également un tissu poreux tridimensionnel permettant également d'avoir une bonne absorption des sons.

Il a également été proposé, dans le brevet français n° 2 319 727, de réaliser des articles tridimensionnels permettant d'obtenir des stratifiés présentant une résistance mécanique élevée et ainsi qu'une bonne résistance aux chocs et à l'abrasion.

Par ailleurs, les brevets US-A-4 131 708 et US-A-4 193 828 décrivent des matériaux tridimensionnels ayant une structure comparable à ceux du brevet français précité.

Cependant, les techniques décrites dans ces documents permettent essentiellement d'obtenir des blocs, mais ne conduisent pas à des éléments textiles tridimensionnels pouvant être réalisés à la continue sur un métier conventionnel et donc avoir une grande longueur. De plus, il n'est pas possible d'obtenir directement des articles tridimensionnels pouvant, après réalisation, se présenter sous la forme d'un T, d'un J, d'un I...

Dans le préambule du brevet français n° 2 315 562, il est indiqué qu'il a déjà été proposé de réaliser des tissus épais tridimensionnels, à partir d'une étoffe bidirectionnelle obtenue par un procédé de tissage classique et comportant des fils de chaîne et des fils de trame, et à enchevêtrer à ce tissu ainsi formé, selon une direction différente des directions en chaîne et en trame, une troisième série de fils et ce, avec un appareil de tissage ou métier convenablement adapté.

Dans un tel mode de réalisation, compte-tenu du fait que les fils de chaîne et de trame sont entrecroisés, il est pratiquement impossible d'utiliser des fibres fragiles tels que des fibres de carbone ou de graphite.

Par ailleurs, parmi tous les matériaux textiles de renforcement tissés proposés à ce jour, il n'a jamais été envisagé de réaliser de tels tissus pour qu'ils puissent permettre d'obtenir, après fabrication, directement des éléments en forme, de grande longueur, présentant par exemple une section transversale en I, T, J, Ω...

Or on a trouvé, et c'est ce qui fait l'objet de la présente invention, un nouveau type d'articles extiles tridimensionnels tissés, susceptibles d'être obtenus directement sur un métier conventionnel, c'est-à-dire dans de grandes longueurs, et ce, non seulement pour obtenir des renforts ayant une section transversale de forme parallélépipédique mais également des éléments textiles de renforcement ayant une section transversale en forme de I, T, J, Ω réalisés en une seule pièce et donc pouvant être utilisés tels quels comme entrant dans la composition de stratifiés de structure.

D'une manière générale, l'article textile tridimensionnel conforme à l'invention permettant la réalisation de matériaux stratifiés est du type dans lequel les fils sont répartis selon trois directions différentes généralement perpendiculaires entre elles,

— deux des directions étant constituées par des nappes de fils de chaîne et des nappes de fils de trame superposées dans des plans parallèles, les fils de ces nappes n'étant pas entrecroisés entre eux, la nappe supérieure et la nappe inférieure de cet empilement étant constituées par des nappes de trame,

— la troisième direction étant constituée par au moins une chaîne de fil de liage qui traverse l'empilement précité, ces fils de liage contournant par ailleurs les fils de trame des nappes externes de manière à former avec ceux-ci un tissu conventionnel emprisonnant les nappes de chaîne et de trame internes.

De préférence, conformément à l'invention les fils de chaîne et les fils de trame constituant les deux premières directions sont des fils à base de graphite, de carbone . . . et les fils de la chaîne de liage sont de préférence des fils fins par exemple de verre ou de polyester.

Un tel article tridimensionnel présente une grande résistance, une épaisseur importante et peut être imprégné avec tout type de résine appropriée, éventuellement dans un moule, et ensuite traité thermiquement pour obtenir un stratifié.

Dans la suite de la description, par mesure de simplification, les fils de chaîne et les fils de trame superposés dans des plans parallèles seront également désignés respectivement par les expressions »fils 0°« et »fils 90°«.

L'article tridimensionnel selon l'invention se caractérise par le fait qu'il est réalisé par tissage, de manière à pouvoir obtenir directement des éléments de renforcement en forme, par exemple ayant une section transversale en forme de I, T, J, Ω . . . Pour cela, le tissu conforme à l'invention est réalisé de telle sorte qu'il présente des zones dans lesquelles les nappes de fils de chaîne (0°) et de trame (90°) superposées sont liées sur toute leur épaisseur et, d'autres zones dans lesquelles lesdites nappes précitées sont séparées en deux groupes élémentaires, chaque groupe étant lié de la même manière que précédemment par des fils de chaîne de liage secondaires. Dans un tel cas, les fils de chaîne de liage secondaires doivent également contourner des fils de trame de manière à former avec ceux-ci un tissu conventionnel emprisonnant des nappes de chaîne et de trame internes superposées.

Dans un tel matériau conforme à l'invention, les fils constituant les nappes superposées (fils 0° et 90°) seront de préférence formés de fils à haut module tels que des fils de graphite, de carbone . . . et les fils de liage seront, comme dit précédemment, de préférence des fils de verre ou de polyester.

Après tissage, un tel matériau est coupé à la longueur désirée, éventuellement associé à d'autres éléments de renfort puis imprégné avec une résine conventionnelle prépolymérisée par exemple une résine époxy.

L'invention et les avantages qu'elle apporte seront cependant mieux compris grâce aux exemples de réalisation donnés ci-après à titre indicatif mais non limitatif, et qui sont illustrés par les schémas annexés dans lesquels:

— la figure 1 est une vue schématique en perspective montrant la structure d'un article textile tridimensionnel,

— la figure 2 est une vue schématique également en perspective montrant un tel article textile tridimensionnel tissé conformément à l'invention et permettant la réalisation d'éléments de renforcement en forme par exemple de I,

— la figure 3 est une vue en perspective détaillée montrant la réalisation d'un élément en forme de I sur les rebords desquels sont rapportés des éléments de renforcement complémentaires, un seul de ces éléments étant représenté par mesure de simplification,

— la figure 4 est une coupe dans le sens de la chaîne selon la ligne A-A des figures 2 ou 3,

— la figure 5 est une coupe selon la ligne B-B des figures 2 et 3, c'est-à-dire vue de côté si l'on considère la figure 1,

— la figure 6 est une coupe selon la ligne C-C de la figure 5,

— les figures 7, 8, 9, 10, 11, 12 et 13 illustrent schématiquement la réalisation de différents types de stratifiés en forme réalisés à partir d'un matériau textile tissé tridimensionnel conforme à l'invention.

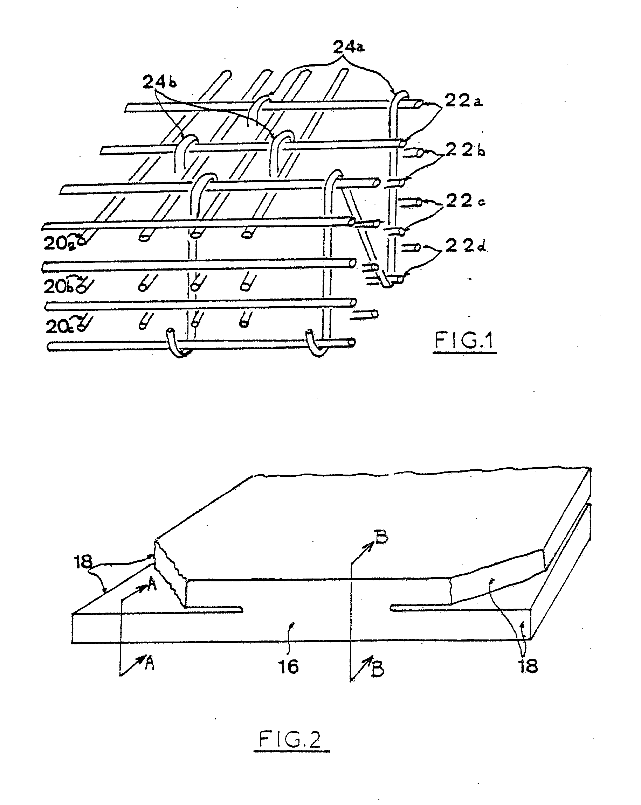

Si l'on se reporte à la figure 1, le matériau textile tridimensionnel est constitué de trois séries de fils répartis dans le tissu selon trois directions différentes généralement perpendiculaires entre elles.

Deux directions sont formées par des nappes de fils de chaîne (20a), (20b), (20c) . . . et des nappes de fils de trame (22a), (22b), (22c), (22d) . . . superposées dans des plans parallèles. Ces fils ne sont pas entrecroisés entre eux et la nappe supérieure ainsi que la nappe inférieure de cet empilement sont constituées de nappes de trame (22a), (22d). Dans ce type de matériau, la troisième direction est formée par des fils de chaîne de liage (24a), (24b) qui traversent l'empilement des nappes précitées, ces fils de liage contournant par ailleurs les fils de trame (22a), (22b) de manière à former avec ceux-ci un tissu conventionnel emprisonnant les nappes de chaîne et de trame internes (20a, 20b, 20c—22b, 22c).

Dans l'exemple de réalisation illustré par la figure 1, les fils de liage (24a, 24b) travaillent avec les fils de trame des nappes supérieure et inférieure selon une armure taffetas, mais cela n'est pas limitatif et d'autres types d'armures pourraient être envisagés. Ainsi, par exemple, les fils de chaîne de liage pourraient éventuellement tous travailler de la même manière et non pas de manière décalée comme dans l'exemple illustré par la figure 1.

Conformément à l'invention, un tel matériau est réalisé sur un métier à tisser conventionnel, la commande des fils de chaîne (20) se faisant de telle sorte que les trames (22) puissent être insérées d'une manière rectiligne entre lesdits fils de chaîne longitudinaux selon un rythme déterminé de telle sorte que l'on obtienne des nappes superposées non entrecroisées entre elles. Dans un tel mode de réalisation les fils de trame (22a, 22b, 22c, 22d) se trouvent alignés dans des plans parallèles, les fils de chaîne (20a, 20b, 20c) étant également alignés orthogonalement par rapport aux fils de trame précités. Par ailleurs, le déplacement du fil de chaîne de liage (24) est réalisé de telle sorte que ces fils contournent les fils de trame des nappes externes (22a), (22b) de manière à former avec ceux-ci un tissu conventionnel emprisonnant les nappes de chaîne et de trame internes.

Si un tel matériau peut éventuellement présenter une section transversale de forme parallélépipédique, il est particulièrement adapté pour réaliser des articles textiles tissés pouvant prendre, après tissage, des configurations diverses telles que des sections en forme de I, de T, de J, de Ω. Un tel type de matériau pouvant être mis sous la forme d'un I est illustré schématiquement à la figure 2. Dans ce mode de réalisation, le tissu conforme à l'invention comporte une zone centrale (16) subdivisée en deux nappes élémentaires (18) sur ses côtés. Le liage des nappes de fils de chaîne et de trame constituant la partie centrale (16) est obtenu par des fils de chaîne de liage s'étendant sur toute l'épaisseur du matériau alors que le liage des nappes élémentaires (18) est obtenu, de la même manière, par des chaînes de liage additionnelles.

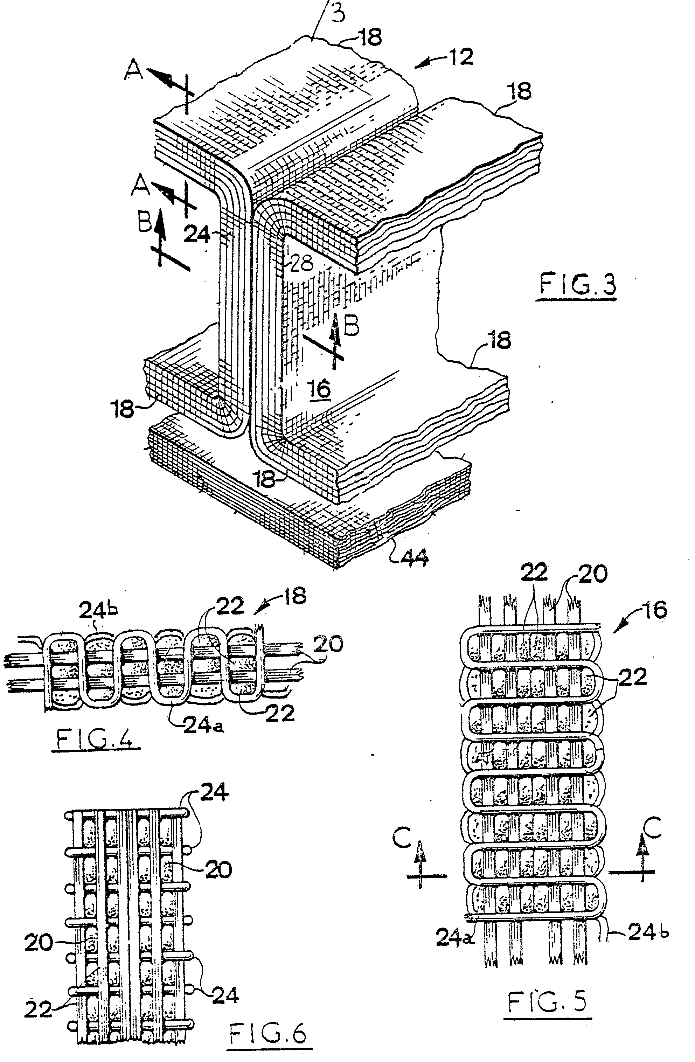

La structure d'un tel matériau représentée plus en détail aux figures 3 à 6, figures dans lesquelles la référence générale (12) est utilisée pour le désigner. Dans cet exemple de réalisation, le tissu conforme à l'invention permet la réalisation d'éléments de renforcement en forme de I et est constitué dans sa partie centrale (16) (voir figure 5) de nappes de chaîne (20) superposées à angle droit avec des nappes de fils de trame (22) de telle sorte que les nappes extérieures soient constituées par les fils de trame (22). Ces nappes sont liées entre elles par des fils de chaîne de liage (24) formant avec les nappes de trame externes (22) un tissu emprisonnant les nappes de chaîne et de trame internes. Dans ce mode de réalisation, la partie centrale (16) du matériau comporte des couches de nappes de fils de trame (22), deux couches médianes (22, 22') étant disposées directement en regard l'une de l'autre et ce, comme cela sera vu plus en détail dans la suite de la description, afin d'obtenir des parties latérales séparées (18) présentées en coupe à la figure 4. Dans cet exemple, quatre nappes de fils de chaîne (20) sont utilisées. Comme précédemment, le liage des nappes de chaîne et de trame est obtenu par des fils de chaîne de liage (24) traversant l'ensemble de l'empilement et venant entourer alternativement les fils de trame (22) situés sur les faces externes dudit empilement. Les nappes (20) et (22) sont de préférence constituées de fils à haut module tels que des fils de graphite ou de carbone, mais pourraient éventuellement être à base d'autres matériaux tels que des fibres de verre ou des fibres organiques telles que celles commercialisées sous la marque Kevlar, voire même des fibres à base de carbure de silicium.

Les fils de liage (24) sont constitués de préférence par des fils fins, par exemple des fils de verre ou des fils aramide ou polyester. Ces fils de liage (24) forment avec les nappes de trame externes un tissu, dans le cas présent ayant une armure taffetas et maintenant les couches internes les unes contre les autres.

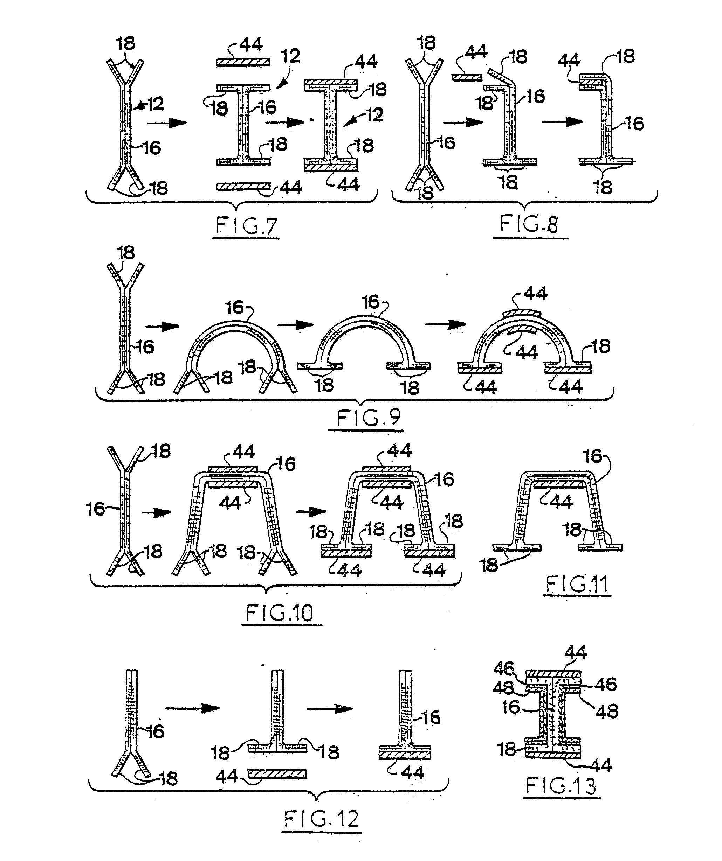

Les parties latérales d'un tel matériau sont constituées tel que cela est représenté à la figure 4, de cinq couches entrecroisées comprenant trois nappes de trame (22) et deux nappes de chaîne (20). Le liage de ces nappes est obtenu, comme précédemment dans la partie centrale (16), par des fils de chaîne additionnels (22) provenant de deux nappes de chaîne différentes, chacune de ces nappes de chaîne permettant de lier chacune des parties séparées (18). On obtient ainsi, directement par tissage, un article tridimensionnel comportant une partie centrale (16) et deux bords (18) en forme de V qui peuvent être repliés en fonction de la forme que l'on désire donner aux matériaux de renforcement, par exemple tel que cela est illustré aux figures 3 et 8 afin d'obtenir un élément en forme de I. Chacune des parties latérales (18) de cet élément en forme de I comporte un nombre de couches égal à la moitié du nombre de couches contenu dans la partie centrale (16).

Un tel matériau peut être associé avec un élément de renforcement complémentaire constitué par exemple par un tissu similaire ou non au tissu conforme à l'invention. Ces éléments de renforcement complémentaires peuvent être rapportés, comme illustré aux figures 3 et 7, sur les extrémités repliées (18) de l'élément en forme conforme à l'invention.

D'autres types d'éléments en forme peuvent également être obtenus à partir d'un tel tissu tel que cela est représenté aux figures 8 à 14.

Ainsi, si l'on se reporte à la figure 8, on peut replier les deux extrémités inférieures (18) vers l'extérieur alors que les deux extrémités supérieures (18) sont rabattues du même côté de manière à obtenir ainsi un élément en forme ayant sensiblement une section en forme de J.

Dans ce cas, il est avantageux d'interposer entre les deux extrémités (18) qui sont repliée du même côté, un élément de renforcement intercalaire (44) tel que cela est schématisé sur cette figure pour notamment obtenir par exemple une partie repliée de plus grande épaisseur.

La figure 9 illustre l'obtention d'un élément en forme d'Ω comportant contre les extrémités (18) repliées à l'extérieur et dans sa partie centrale des éléments de renforcement complémentaires (44).

Les figures 10, 11 et 12 illustrent d'autres possibilités de réalisation d'éléments en forme à partir d'un tel matériau comportant également des éléments de renforcement complémentaires (44) dans certaines zones.

Enfin, la figure 13 illustre une poutre constituée d'un élément textile (12) conforme à l'invention dont les extrémités (18) ont été repliées pour avoir une configuration en I. Des éléments de renforcement (44) sont rapportés sur les parties extérieures des bords (18). Par ailleurs, dans la partie centrale, peuvent être disposés des tissus de renforcement complémentaires (46—48) pouvant être formés de tissu conventionnel bidirectionnel ayant par exemple des orientations différentes.

Les matériaux textiles en forme ainsi réalisés sont ensuite imprégnés de résine, par exemple d'une résine époxy, que l'on traite thermiquement de manière conventionnelle pour obtenir la réticulation et l'article stratifié proprement dit. De tels traitements étant bien connus ne seront donc pas décrits en détail.

Les exemples qui précèdent montrent bien les avantages apportés par l'invention et notamment le fait qu'il est possible d'obtenir à partir d'un tel tissu tridimensionnel, une pluralité d'éléments en forme permettant de réaliser des stratifiés pouvant jouer le rôle de pièces de structure.

Par rapport aux techniques antérieures, un tel matériau présente l'avantage de pouvoir être obtenu directement sur des métiers à tisser conventionnels donc de manière industrielle. Il est facile à manipuler et à stocker et rend possible la réalisation d'éléments de très grande longueur.

Bien entendu, l'invention n'est pas limitée aux modes de réalisation décrits précédemment mais elle en couvre toutes les variantes réalisées dans le même esprit.

**Revendications**

1. Article textile tridimensionnel pour la réalisation de matériaux stratifiés du type dans lequel les fils sont répartis selon trois directions différentes généralement perpendiculaires entre elles,

— deux directions étant constituées de nappes de fils de chaîne (20) et de fils de trame (22) superposées dans des plans parallèles, les fils de ces nappes n'étant pas entrecroisés entre eux, la nappe supérieure et la nappe inférieure de cet empilement étant constituées de nappes de trame (22),
— la troisième direction étant constituée par au moins une chaîne de fils de liage (24) qui traverse l'empilement précité, ces fils de liage (24) contournant par ailleurs les fils de trame (22) des nappes externes de manière à former avec ceux-ci un tissu conventionnel emprisonnant les nappes de chaîne (20) et de trame (22) internes,

caractérisé par le fait qu'il est réalisé par tissage et qu'il présente une zone (16) dans laquelle les nappes de fils de chaîne (20) et de trame (22) superposées sont liées sur toute leur épaisseur et d'autres zones (18) dans lesquelles lesdites nappes précitées sont séparées en deux groupes élémentaires, chaque groupe étant lié de la même manière que précédemment par des fils de chaîne de liage secondaires.

2. Article textile selon la revendication 1, caractérisé par le fait que les nappes de trame (22) et de chaîne (20) sont à base de fils de graphite, de verre, de carbure de silicium, ou de fibres organiques, les fils de liage (24) étant des fils de verre, des fils organiques.

3. Article textile selon l'une des revendications 1 et 2, caractérisé par le fait que les parties séparées (18) sont repliées par rapport à la zone centrale (16) de manière à obtenir une configuration en forme de I, de J, de T, d'Ω.

4. Élément en forme obtenu à partir d'un article textile tridimensionnel selon la revendication 3, caractérisé par le fait qu'il comporte des éléments textiles de renforcement additionnels (44) rapportés sur les bords repliés (18).

5. Élément selon la revendication 4, caractérisé par le fait qu'il se présente sous la forme d'un I dont la partie supérieure et la partie inférieure sont constituées par les bords repliés (18) du matériau, des éléments de renforcement additionnels (44) étant rapportés sur ces bords et des éléments additionnels (46), (48) étant également rapportés dans la partie centrale dudit matériau.

**Patentansprüche**

1. Dreidimensionaler Textilartikel für die Herstellung von Schichtwerkstoffen, in dem die Fäden in drei verschiedenen, im wesentlichen zueinander senkrechten Richtungen verteilt sind,

— von denen zwei Richtungen aus in parallelen Ebenen übereinanderliegenden Lagen von Kettfäden (20) und Schußfäden (22) gebildet sind, wobei die Fäden dieser Lagen einander nicht kreuzen und die obere und die untere Lage dieser Schichtung aus einer Lage Schußfäden (22) besteht,
— und die dritte Richtung aus mindestens einer Kette von Bindefäden (24) gebildet ist, welche die Schichtung durchdringt, wobei die Bindefäden (24) außerdem die Schußfäden (22) der äußeren Lagen derart umschlingen, daß sie mit diesen ein herkömmliches Gewebe bilden, wodurch die inneren Lagen von Kettfäden (20) und Schußfäden (22) festgehalten werden,

dadurch gekennzeichnet, daß er durch Weben hergestellt ist und eine Zone (16) aufweist, in der die übereinanderliegenden Lagen von Kettfäden (20) und Schußfäden (22) über die ganze Dicke verbunden sind, und andere Zonen (18), in denen diese Lagen in zwei Elementargruppen geteilt sind, von denen jede in gleicher Weise durch sekundäre Binde-Kettfäden gebunden ist.

2. Textilartikel nach Anspruch 1, dadurch gekennzeichnet, daß die Lagen von Schußfäden (22) und Kettfäden (20) auf der Basis von Fäden aus Graphit, Glas, Siliziumkarbid oder organischen Fasern sind und die Bindefäden (24) Glasfäden oder organische Fäden sind.

3. Textilartikel nach einem der Ansprüche 1 oder 2, dadurch gekennzeichnet, daß die geteilten Bereiche (18) gegenüber der zentralen Zone (16) derart umgebogen sind, daß sich eine I-, J-, T- oder Ω-Form ergibt.

4. Formelement, das aus einem dreidimensionalen Textilartikel nach Anspruch 3 hergestellt ist, dadurch gekennzeichnet, daß es zusätzliche textile Verstärkungselemente (44) aufweist, die auf die umgebogenen Ränder (18) aufgesetzt sind.

5. Element nach Anspruch 4, dadurch gekennzeichnet, daß es die Form eines I hat, bei dem der obere Teil und der untere Teil durch die umgebogenen Ränder (18) des Materials gebildet sind, zusätzliche Verstärkungselemente (44) auf diesen Rändern angebracht sind und zusätzliche Elemente (46), (48) auch im zentralen Teil dieses Materials angeordnet sind.

## Claims

1. Three-dimensional textile article for the realization of stratified materials of the type in which the yarns are distributed in three different directions generally perpendicular to other,

— two directions being constituted of layers of warp yarns (20) and of fill yarns (22) superposed in parallel plans, yarns of said layers being not enterlaced to each other, the upper layer and the lower layer of this stacking being composed of fill yarns (22),
— the third direction being composed by at least one warp of the yarns (24) passing through the above noted stacking, said tie yarns (24) passing back and forth over the fill yarns (22) of the outside layers so as to form therewith a fabric containing inner layers of warp and fill layers (20, 22),

characterized by the fact it is realized by weaving and it comprises one area (16) in which the superposed layers of warp yarns (20) and of fill yarns (22) are tied together throughout their entire thickness and other areas (18) in which the above noted layers are separated into two individual groups, each group being tied in the same manner set forth above by said additionnal tie yarns.

2. Textile article according to claim 1, characterized by the fact that the layers of fill yarns (22) and of warp yarns (20) are graphite, fiberglass, carbon, silicon or organic fibers, and the tie yarns (24) being fiberglass or organic yarns.

3. Textile article according one of the claims 1 and 2, characterized by the fact that the separate parts (18) are folded with regard to the central area (16) in order to obtain a configuration in the shape of I, J, T, Ω.

4. Shaped element obtained with a three-dimensional textile article according to the claim 3, characterized by the fact that it comprises additional reinforcement textile elements (44) fixed to the folded parts (18).

5. Element according to the claim 4, characterized by the fact it is in the shape of an I the upper and lower parts of which being formed by the folded part (18) of the material, additional reinforcement element (44) being fixed on the flanges and additional elements (46), (48) being also fixed in the central part of the said material.

FIG.1

FIG.2

FIG.3

FIG.4

FIG.5

FIG.6

FIG.7

FIG.8

FIG.9

FIG.10

FIG.11

FIG.12

FIG.13